# EUROPÄISCHE PATENTSCHRIFT

(11) **EP 1 854 646 B1**
(45) Veröffentlichungstag und Bekanntmachung des Hinweises auf die Patenterteilung: **29.10.2008**
(21) Anmeldenummer: 07450040.6
(22) Anmeldetag: 05.03.2007
(51) Int. Cl.: B60C 27/10

(54) **Umlenkeinrichtung für eine Gleitschutzkette**
Switching device for an anti-skid chain
Dispositif de déviation pour une chaîne antidérapante

(30) Priorität: 12.05.2006 AT 8272006
(43) Veröffentlichungstag der Anmeldung: 14.11.2007
(73) Patentinhaber: Pewag Schneeketten GMBH & Co KG, 8020 Graz (AT)
(72) Erfinder: Pengg, Ägyd, 9020 Klagenfurt (AT)
(74) Vertreter: Patentanwaltskanzlei Matschnig

(56) Entgegenhaltungen:
- EP-A- 0 835 770
- AT-B- 408 635

## Beschreibung

Die Erfindung betrifft eine Umlenkeinrichtung, insbesondere eine Umlenkrolle, für eine Gleitschutzkette mit einem in einem Gehäuse drehbar gelagerten Kettenrad für eine darin einlegbare Kette und einem Betätigungselement, welches zwischen einer Raststellung, in der die Bewegung des Kettenrads in eine Richtung blockiert ist, und einer Freigabestellung, in der die Blockierung aufgehoben ist, bewegbar ist und welches über eine von ihm betätigte Sperrklinke mit einem mit dem Kettenrad drehfest verbundenen Zahnkranz zusammenwirkt.

Umlenkeinrichtungen der genannten Art werden bei Gleitschutzketten, insbesondere Schneeketten, als Spannvorrichtungen verwendet, um nach der Montage die Gleitschutzkette zu spannen. Um ein unerwünschtes Rücklaufen der Spannkette zu vermeiden, ist die Bewegung (Drehung) der Umlenkrolle gegen die Spannung blockiert, jedoch soll die Blockierung bei Bedarf gelöst werden können, beispielsweise wenn die Kette abgenommen wird.

Die gattungsbildende AT 408 635 B beschreibt die Blockierung einer Rolle, freilich in Zusammenhang mit einer Spannvorrichtung für ein darin aufgewickeltes Seil, mit einem Betätigungsglied mit drei Stellungen. Zwei miteinander drehfest verbundene Klinkenräder sind jeweils Sperrklinken zugeordnet und weisen gegenläufige Sperrrichtungen auf. Das Betätigungsglied wirkt auf die zwei Sperrklinken, wobei in einer ersten Raststellung die eine Sperrklinke in das ihr zugeordnete Klinkenrad eingreift, während in einer zweiten Raststellung die andere Sperrklinke in das ihr zugeordnete Klinkenrad eingreift, sodass die Bewegung in bzw. gegen die Spannrichtung freigegeben und in bzw. gegen die Gegenrichtung blockiert ist; in einer dritten Stellung, einer dazwischen einstellbaren Freigabestellung, greift keine der Sperrklinken ein und die Blockierung ist aufgehoben. Abgesehen von dem doppelten Klinkenrad ist diese Vorrichtung aufwändig und stellt hohe Anforderungen an die Präzision der Ausführung; außerdem ist die Bedienung durch die drei Stellungsmöglichkeiten kompliziert.

Es ist Aufgabe der Erfindung, eine entriegelbare Umlenkeinrichtung zu schaffen, die - was insbesondere bei der Verwendung für LKW-Reifenketten wichtig ist - eine verbesserte Sicherheit der Blockierung und doch einfache Entriegelung bietet.

Diese Aufgabe wird von einer Umlenkeinrichtung der eingangs genannten Art gelöst, bei welcher erfindungsgemäß der Zahnkranz als Innenzahnkranz des Kettenrads realisiert ist, und die Sperrklinke innerhalb des von dem Zahnkranz umgebenen Innenraums schwenkbar angeordnet ist, wobei die Sperrklinke in der Raststellung in den Zahnkranz eingreift, jedoch in der Freigabestellung von dem Betätigungselement (direkt oder mittelbar) von dem Zahnkranz abgehoben wird.

Durch diese Lösung ergibt sich eine hinsichtlich der auftretenden Kräfte günstige Anordnung, die sich in verbesserter Sicherheit und Robustheit äußert. Außerdem sind die mechanischen Komponenten der Verriegelungen durch die Einbeziehung in einen innerhalb des Kettenrads gelegenen Raumes besser geschützt, und die Vorrichtung ist insgesamt kompakter.

In einer bevorzugten Ausführungsform der Erfindung wird die zum Entriegeln benötigte Kraft zusätzlich dadurch verringert, dass die Sperrklinke um eine zur Drehachse des Kettenrads exzentrischen Achse schwenkbar ist.

Des weiteren ist es für den Bedienungskomfort und die Zugänglichkeit von Vorteil, wenn das Kettenrad um eine Ebene senkrecht zu seiner Drehachse spiegelsymmetrisch ist, und zwei Betätigungselemente vorgesehen sind, die zueinander gegenüber liegend angeordnet sind. Dies ermöglicht es insbesondere, das beim Anlegen der Kette nicht darauf geachtet werden muss, welche Seite "innen" oder "außen" ist, da die Umlenkeinrichtung von beiden Seiten bedient werden kann.

Die Erfindung samt ihren Vorzügen und vorteilhaften Ausgestaltungen wird im Folgenden anhand eines nicht einschränkenden Ausführungsbeispiels einer Umlenkrolle näher erläutert, das in den beigefügten Zeichnungen dargestellt ist. Die Figuren zeigen
- Fig. 1: die Umlenkrolle in einer Ansicht auf die Taschen des Kettenrads,
- Fig. 2: eine explodierte Darstellung der Umlenkrolle,
- Fig. 3: die Umlenkrolle in axialer Ansicht mit teilweise entferntem Gehäuse, und
- Fig. 4: die Umlenkrolle in Ansicht wie in Fig. 3, jedoch in entriegelter Stellung.

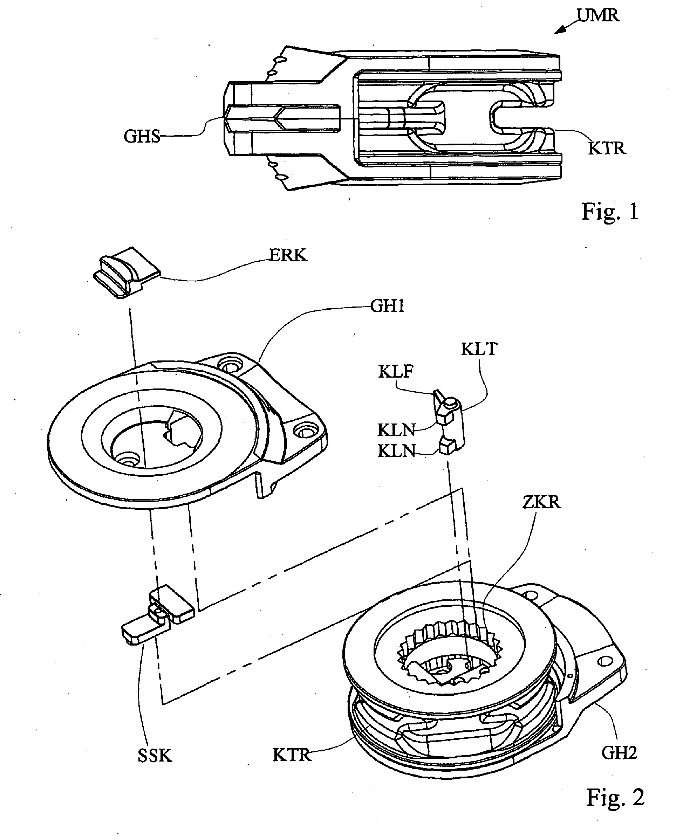

Gemäß Fig. 1 weist eine erfindungsgemäße Umlenkrolle UMR ein in einem Gehäuse GHS gelagertes Kettenrad KTR auf. Das Kettenrad KTR weist nach an sich bekannter Art Taschen zur Aufnahme der einzelnen Kettenglieder auf, sodass eine (nicht gezeigte) eingelegte Kette nur gemeinsam mit dem Kettenrad durch die Umlenkrolle UMR bewegt werden kann.

Wie auch aus Fig. 2 ersichtlich ist, ist das Gehäuse GHS beispielsweise zweiteilig ausgeführt, wobei die Gehäusehälften GH1.GH2 jeweils mit einer schalenartigen Deckfläche eine Stirnfläche des Kettenrads abdecken und mithilfe seitlicher Befestigungselemente und/oder eines durch die Drehachse des Kettenrades verlaufenden Befestigungselements zusammengefügt sind, z.B. miteinander verschraubt. An den Befestigungselementen können auch je nach Bedarf Halteelemente zur Befestigung eines anderen Ketten- oder Seilstranges vorhanden sein. Die Innenseiten der Deckflächen der Gehäusehälften GH1, GH2 sind mit Ringführungen (z.B. Ringnuten bzw. Ringleisten) ausgestattet, die zusammen mit entsprechenden Strukturen in den Stirnflächen des Kettenrads der drehbaren Lagerung des Kettenrads KTR dienen.

Längs der Achse des Kettenrads KTR erstreckt sich ein Innenraum, der die Sperrmechanik der Umlenkrolle aufnimmt. An der Innenseite des Kettenrads ist ein Zahnkranz ZKR als Innenzahnrad realisiert. Die Umlenkrolle des gezeigten Ausführungsbeispiels ist spiegelsymmetrisch um ihre Mittelebene gestaltet, und neben einem ersten Zahnkranz in dem in Fig. 2 oberen Drittel des Innenmantels ist ein symmetrisch angeordneter, und somit im unteren Drittel befindlicher, zweiter Zahnkranz vorhanden. In einer Öffnung in einer Gehäusehälfte GH1 ist ein Entriegelknopf ERK angeordnet, der über ein mit ihm starr verbundenes Schieberstück SSK ein Klinkenelement KLT betätigt und als Betätigungselement zum Entriegeln des Kettenrads wie im Folgenden beschrieben dient. (In der anderen Gehäusehälfte GH2 ist entsprechend der Symmetrie ebenfalls ein gleichartig wirkender Entriegelknopf vorgesehen, der über ein eigenes Schieberstück auf dieselbe Sperrklinke wirkt; in einer Variante könnte er auch auf eine zweite Sperrklinke wirken.) Wie bereits angedeutet ist das Klinkenstück KLT ebenso wie das Schieberstück SSK im Innenraum des Kettenrads angeordnet, wobei das Klinkenstück KLT an seinen Enden in Vertiefungen in den Gehäuse-Deckflächen derart gelagert ist, dass ein Verschwenken um die eigene Achse möglich ist. Das Klinkenstück KLT weist zwei Klinkennasen KLN auf, die jeweils in einen Zahnkranz ZKR des Kettenrads eingreifen können und dessen Bewegung hemmen.

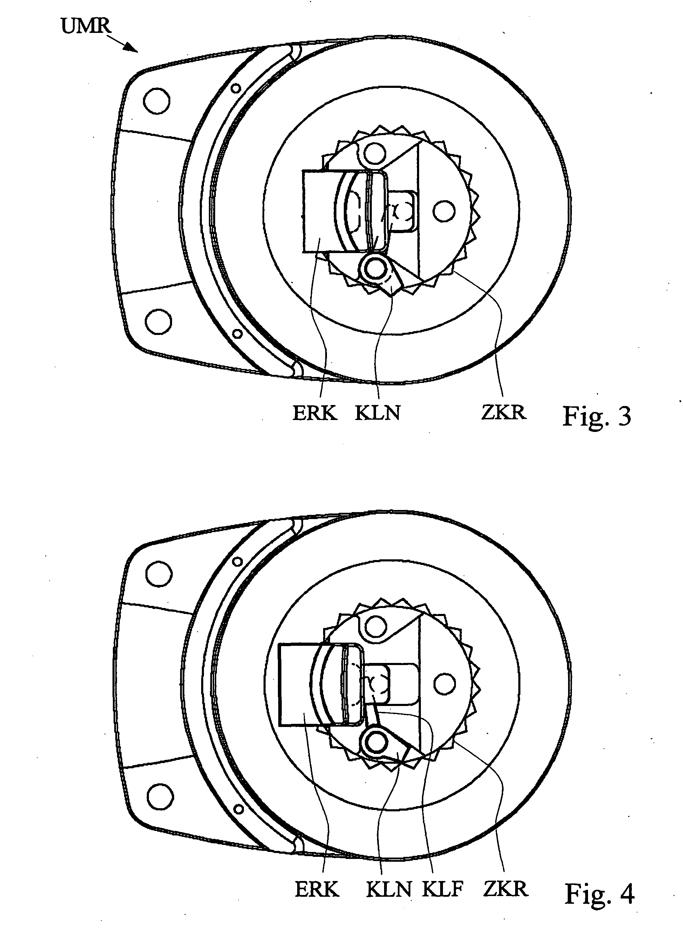

Fig. 3 zeigt die Anordnung der Sperrklinke im unbetätigten Zustand. Die Klinkennase KLN greift in den Zahnkranz ZKR ein und hemmt so eine Bewegung des Zahnkranzes in eine Richtung, nämlich in der Zeichnung im Uhrzeigersinn. Die Klinkennase wird durch die Kraft einer (nicht gezeigten) Feder gegen den Zahnkranz ZKR gedrückt. Eine Bewegung in die andere Richtung (in der Zeichnung gegen den Uhrzeigersinn) dagegen wird durch die Klinke nicht gehemmt, es ist lediglich der vergleichsweise geringfügige Widerstand der Federkraft zu überwinden; hierbei schnappt ("ratscht") die Klinkennase nach jedem Zahn neuerlich in den Zahnkranz ein.

Wenn wie in Fig. 4 gezeigt der Entriegelknopf ERK betätigt wird - in der Zeichnung durch Bewegung nach links -, wird diese Bewegung über das Schieberstück dem Klinkenstück KLT mitgeteilt. Das Klinkenstück KLT weist hierzu einen Flügel KLF auf, über den nach Art eines Hebels das Schieberstück die Klinkennase KLN aus dem Zahnkranz herausdreht. Der Zahnkranz ist somit in beide Richtungen frei drehbar: die Umlenkrolle ist entriegelt. Wird de Entriegelknopf freigegeben, springt durch die Federkraft die Klinke zurück in die in Fig. 3 gezeigte Position und schiebt zugleich Klinkenstück und Entriegelknopf ERK in die unbetätigte Position zurück.

Wie bereits erwähnt, ist die Umlenkrolle des gezeigten Ausführungsbeispiels spiegelsymmetrisch um ihre Mittelebene gestaltet. Es liegt für den Fachmann auf der Hand, dass auch Realisierungen der Erfindung ohne eine derartige Symmetrie möglich sind; insbesondere könnte lediglich ein Entriegelungsknopf auf einer der Gehäuse-Deckflächen vorgesehen sein.

## Patentansprüche

1. Umlenkeinrichtung (UMR) für eine Gleitschutzkette mit einem in einem Gehäuse (GHS) drehbar gelagerten Kettenrad (KTR) für eine darin einlegbare Kette und einem Betätigungselement (ERK,SSK), welches zwischen einer Raststellung, in der die Bewegung des Kettenrads in eine Richtung blockiert ist, und einer Freigabestellung, in der die Blockierung aufgehoben ist, bewegbar ist und welches über eine von ihm betätigte Sperrklinke mit einem mit dem Kettenrad drehfest verbundenen Zahnkranz (ZKR) zusammenwirkt,
**dadurch gekennzeichnet, dass**
der Zahnkranz (ZKR) als Innenzahnkranz des Kettenrads realisiert ist, und die Sperrklinke innerhalb des von dem Zahnkranz (ZKR) umgebenen Innenraums schwenkbar angeordnet ist, wobei die Sperrklirike in der Raststellung in den Zahnkranz eingreift, jedoch in der Freigabestellung von dem Betätigungselement (ERK,SSK) von dem Zahnkranz abgehoben wird.

2. Umlenkeinrichtung nach Anspruch 1 **dadurch gekennzeichnet, dass** die Sperrklinke um eine zur Drehachse des Kettenrad (KTR) exzentrischen Achse schwenkbar ist.

3. Umlenkeinrichtung nach Anspruch 1 oder 2, **dadurch gekennzeichnet, dass** das Kettenrad (KTR) um eine Ebene senkrecht zu seiner Drehachse spiegelsymmetrisch ist, und zwei Betätigungselemente (ERK,SSK) vorgesehen sind, die zueinander gegenüber liegend angeordnet sind.

## Claims

1. A deflection device (UMR) for an anti-skid chain, comprising a chain wheel (KTR) rotatably mounted in a housing (GHS) for the accommodation of a chain which can be inserted into the chain wheel, and an actuating element (ERK, SSK) which can be moved between a locking position, in which the movement of the chain wheel is blocked in one direction, and an unlocking position, in which said blocking is released, and which engages, via a locking pawl actuated by said actuating element, a toothed ring (ZKR) connected non-rotatably to the chain wheel,
**characterized in that**
said toothed ring (ZKR) is realized as an internally-toothed ring of the chain wheel, and the locking pawl is pivotally mounted within the interior space surrounded by the toothed ring (ZKR), wherein the locking pawl engages the toothed ring in the locking position but is disengaged from the toothed ring by the actuating element (ERK, SSK) in the unlocking position

2. The deflection device according to claim 1, **characterized in that** said locking pawl is pivotally mounted on an axis which is eccentric relative to the axis of said chain (KTR) wheel.

3. The deflection device according to claim 1 or 2, **characterized in that** said chain wheel (KTR) is mirror-symmetrical about a plane normal to its axis of rotation, and two actuating elements (ERK, SSK) are provided located opposite each other.

## Revendications

1. Dispositif de renvoi (UMR) pour une chaîne antidérapante avec un barbotin (KTR) rotatif monté dans un carter (GHS) pour une chaîne insérable à l'intérieur de celui-ci, et avec un élément d'actionnement (ERK, SSK) qui est déplaçable entre une position d'enclenchement où le mouvement du barbotin est bloqué dans une direction et une position de libération où le blocage est annulé, et qui coopère avec une couronne dentée (ZKR) fixement reliée en rotation avec le barbotin, au moyen d'un cliquet d'arrêt qu'il commande,
**caractérisé en ce que**
la couronne dentée (ZKR) est réalisée comme couronne dentée intérieure du barbotin, et **en ce que** le cliquet d'arrêt pivotant est disposé à l'intérieur du compartiment entouré par la couronne dentée (ZKR), ledit cliquet d'arrêt s'engageant dans la couronne dentée en position d'enclenchement, mais étant dégagé de la couronne dentée par l'élément d'actionnement (ERK, SSK) en position de libération.

2. Dispositif de renvoi selon la revendication 1, **caractérisé en ce que** le cliquet d'arrêt est pivotant autour d'un axe excentré par rapport à l'axe de rotation du barbotin (KTR).

3. Dispositif de renvoi selon la revendication 1 ou 2, **caractérisé en ce que** le barbotin (KTR) est symétrique en miroir par rapport à un plan perpendiculairement à son axe de rotation, et **en ce que** deux éléments d'actionnement (ERK, SSK) sont prévus, superposés l'un à l'autre.
